Europäisches Patentamt

European Patent Office

Office européen des brevets

(11) Publication number: **0 494 484 A1**

# EUROPEAN PATENT APPLICATION

(21) Application number: **91300145.9**

(22) Date of filing: **09.01.91**

(51) Int. Cl.⁵: **G01D 15/24, B65H 23/04**

(43) Date of publication of application:
**15.07.92 Bulletin 92/29**

(84) Designated Contracting States:
**CH DE FR GB LI SE**

(71) Applicant: **MIMAKI ENGINEERING CO., LTD.**
**1333-3 Oaza Kazawa, Tohbu-machi**
**Chiisagata-gun, Nagano-ken(JP)**

(72) Inventor: **Sunohara, Ichiro, c/o Mimaki**

Engineering Co., Ltd.
1333-3 Oaza Kazawa, Tohbu-machi
Chiisagata-gun, Nagano-ken(JP)

(74) Representative: **Cheyne, John Robert**
**Alexander Mackenzie et al**
**HASELTINE LAKE & CO. 28 Southampton**
**Buildings Chancery Lane**
**London WC2A 1AT(GB)**

(54) **Roll paper supporting device of cutting plotter.**

(57) In a roll paper supporting device of cutting plotter, there are provided supporting means for rotatably supporting said roll paper in normal and reverse directions in front and rear of said recording plane, driving means for rotating roll paper supported by the supporting means in normal and reverse directions, and adjusting means for adjusting the length of the sheet uncoiled from roll paper by rotating roll paper supported by said supporting means in normal and reverse directions by said driving means so that the slackening of the sheet extending in front and rear of said recording plane, uncoiled from roll paper supported by said supporting means, is within the range of the predetermined length.

## FIG.1

BACKGROUND OF THE INVENTION

The present invention relates to a supporting device for supporting roll paper, in which the sheet to be cut by a cutting plotter is wound in roll.

In recent years, a so-called vertical type cutting plotter has appeared, by which the sheet uncoiled from roll paper is moved in front and rear of the recording plane, and a cutter mounted on pen carriage is pressed on the surface of said sheet, and by moving pen carriage over the recording plane in lateral direction, the surface of the sheet is cut to the desired shape. Such cutting plotter is now widely used for cutting off the characters for signboard or the marking characters from the sheet such as polyvinyl chloride.

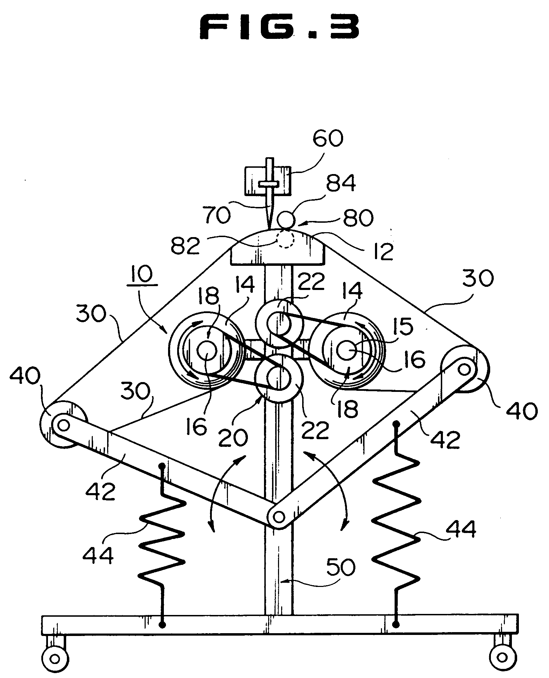

In a conventional type cutting plotter, the roll paper is supported by a supporting device as shown in Fig. 3.

Such supporting device is provided with supporting means 18 having support bar 16 or the like for rotatably supporting roll paper in normal and reverse direction squeezing the recording plane 12 and driving means 20 such as AC motor 22 for rotating the roll paper 14 supported on said supporting means in normal and reverse direction, a tension bar 40 inserted into inner bottom of the sheet 30 extending in front and rear of the recording plane 12 and slackened in U-shape, uncoiled from the roll paper 14 supported on said supporting means, an arm 42 rotatably supporting both ends of said tension bar on plotter main body 50, and a coil spring 44 giving pushing force to rotate said arm toward the lower portion of the plotter main body 50.

By this supporting device, it is possible to support each of the roll papers 14 of the long sheet 30 coiled on two rolls continuously by the supporting means in front and rear of the recording plane 12. By inserting the sheet 30 in the middle portion of the roll paper 14 coiled on two rolls over the recording plane 12, the sheet 30 extending in front and rear of the recording plane 12 is slackened in U-shape. With the tension bar 40 placed into the inner bottom of the slackened sheet 30, the driving means 20 is operated, and the roll paper 14 supported on the supporting means 18 in front and rear of the recording plane 12 is rotated in normal and reverse directions. The sheet 30 is then uncoiled from the roll paper 14 supported on the supporting means 18 in rear of the recording plane 12, and the uncoiled sheet 30 is moved in front-back direction over the recording plane 12. Thus, the sheet can be coiled on the roll paper 14 supported on the supporting means 18 ahead of the recording plane 12. At the same time, by pressing the inner bottom of the sheet 30 slackened in U-shape extending in front and rear of the recording plane 12 toward outward direction by the arm 42 and the tension bar 40, utilizing resilient force of coil spring 44, the desired tension can be applied on the sheet 30 moving in front-back direction over the recording plane 12.

However, when roll paper 14 is supported by the above supporting device, as the sheet 30 is deviated to left or right over the recording plane 12, the sheet 30 uncoiled from roll paper 14 is moved in front-back direction over the recording plane 12 by placing it between driving roller 82 and pinch roller 84 of the feeding means 80. As the result, the surface of the sheet 30 cannot be cut accurately in the desired shape by the cutter 70 mounted on pen carriage 60. The reason for this is that the tension bar 40 placed into the inner bottom of the sheet 30 slackened in U-shape hits either left side or right side of the inner bottom of the sheet , and the bottom of the U-shaped sheet 30 moves around the tension bar from one side to another.

At the same time, when the sheet 30 is fed in front-back direction over the recording plane 12 by placing it between driving roller 82 and pinch roller 84 of the feeding means 80, excessive tension is applied in either forward or backward direction. As the result, the above sheet 30 slips over the recording plane 12 in forward or backward direction, and the surface of the above sheet 30 cannot be cut accurately in the shape as desired. The rotating angle of the tension bar 40, which is rotatably supported on the plotter main body 50 in front and rear of the recording plane 12 through the arm 42, often varies in each case. In such case, the pushing force of the tension bar 40 to outward direction due to the resilient force of coil spring 44 differs when the tension bar 40 is in front or in rear of the recording plane 12. Specifically, when the arm 42 is rotated vertically upward, resilient force from coil spring 44 is not applied very much on the tension bar 40, whereas, when the arm 42 is rotated nearly horizontally, resilient force from the spring 44 is applied on tension bar 40 to a greater extent. Thus, the tension deviated either forward or backward is applied on the sheet 30, which passes over the recording plane 12.

SUMMARY OF THE INVENTION

To solve such problems, the object of the present invention is to offer a roll paper supporting device of cutting plotter (hereinafter referred simply as "supporting device"), which can accurately feed the sheet, uncoiled from roll paper, over the recording plane without causing the deviation to either left or right or slipping over the recording plane.

To attain the above object, the first supporting device according to the present invention is used for a cutting plotter to cut the surface of the sheet in the desired shape by moving pen carriage toward left and right over the recording plane when the sheet uncoiled from roll paper is moved in front and rear of the recording plane with the cutter on pen carriage pressed on the surface of said sheet, characterized in that there are provided supporting means for rotatably supporting said roll paper in normal and reverse directions in front and rear of said recording plane, driving means for rotating roll paper supported by the supporting means in normal and reverse directions, and adjusting means for adjusting the length of the sheet uncoiled from roll paper by rotating roll paper supported by said supporting means in normal and reverse directions by said driving means so that the slackening of the sheet extending in front and rear of said recording plane, uncoiled from roll paper supported by said supporting means, is within the range of the predetermined length.

The second supporting device according to the present invention is used for a cutting plotter to cut the surface of the sheet in the desired shape by moving pen carriage toward left and right over the recording plane when the sheet uncoiled from roll paper is moved in front and rear of the recording plane with the cutter on pen carriage pressed on the surface of said sheet, characterized in that there are provided supporting means for rotatably supporting said roll paper in normal and reverse directions in rear of said recording plane, driving means for rotating roll paper supported on the supporting means in normal and reverse directions, and adjusting means for adjusting the length of the sheet, uncoiled from roll paper by rotating the roll paper supported by said supporting means and by rotating by said driving means in normal and reverse directions so that the slackening of the sheet, uncoiled from roll paper supported by said supporting means and extending in rear of said recording plane, is within the range of the predetermined length.

In the first supporting device with the arrangement as described above, each of the roll papers coiled on two rolls continuously of the front and the rear portions of long sheet is rotatably supported by the supporting means in front and rear of the recording plane in normal and reverse directions. At the same time, the sheet connecting the roll papers coiled on these two rolls are passed over the recording plane forward and backward. The sheet extending over the recording plane forward and backward is directed downward and is slackened in nearly U-shape.

In case the slackening of the sheet extending in front and rear of the recording plane becomes too long or too short when the surface of the sheet is being cut by the cutter mounted on pen carriage by moving the sheet over the recording plane forward and backward, the adjusting means is operated to adjust the length of the sheet uncoiled from roll paper by rotating the roll paper supported on the supporting means in front and rear of the recording plane by the driving means in normal and reverse directions so that the slackening of the sheet extending in front and rear of the recording sheet is within the range of the predetermined length.

Then, it is possible to continuously and uniformly apply proper tension on each of the sheet slackened in U-shape extending in front and rear of the recording plane and to move said sheet downward utilizing its own weight. Thus, the sheet can be wound up on the roll paper supported on the supporting means in front of the recording plane by moving it accurately forward or backward with adequate tension applied on the recording plane without applying tension deviated to either left or right and deflecting the sheet over the recording plane or without causing the slipping of the sheet over the recording paper by applying the tension deviated either forward or backward.

In the second supporting means with the above arrangement, long sheet is coiled on one roll and this roll paper is rotatably supported by the suppoting means in rear of the recording plane in normal and reverse directions, and the sheet uncoiled from the roll paper is passed over the recording plane in forward and backward directions. The sheet is extended in front and rear of the recording plane, and the sheet extended in rear of the recording plane is slackened downward in nearly U-shape.

Then, the sheet is moved over the recording plane forward and backward. When the slackening of the sheet extending in rear of the recording plane is too long or too short during the cutting of the sheet surface by the cutter mounted on pen carriage, the adjusting means is operated, and the roll paper supported by the supporting means is rotated in normal and reverse directions to uncoil the sheet from roll paper or to coil the sheet on roll paper. Thus, the slackening of the sheet extending in rear of the recording plane is adjusted so that it is within the range of the predetermined length.

Then, as in the case of the first supporting device as described above, it is possible to apply proper tension evenly and continuously on the sheet to lower it downward utilizing its own weight, with each of the sheets extending in front and rear of the recording plane when the sheet uncoiled from roll paper is passed over the recording plane. As the result, it is possible to send the sheet ahead of the recording plane and to accurately move it with proper tension applied on it without applying deviated tension and moving the sheet either to left or right over the recording plane or without causing the slipping of the sheet over the recording plane by applying unilateral tension either forward or backward.

## BRIEF DESCRIPTION OF THE DRAWINGS

Fig. 1 is a schematical structural drawing of a first roll paper supporting device of cutting plotter of this invention;

Fig. 2 is a schematical structural drawing of a second roll paper supporting device of cutting plotter of this invention;

Fig. 3 is a schematical structural drawing of a conventional type roll paper supporting device of the cutting plotter.

In the figures, 12 represents a recording surface, 14 roll paper, 18 supporting means, 22 driving means, 30 sheet, 50 a plotter main body, 54 and 56 photosensors, 60 a pen carriage, 70 a cutter, and 100 adjusting means.

## DETAILED DESCRIPTION OF THE PREFERRED EMBODIMENTS

Next, the embodiments of the present invention will be described in connection with the drawings.

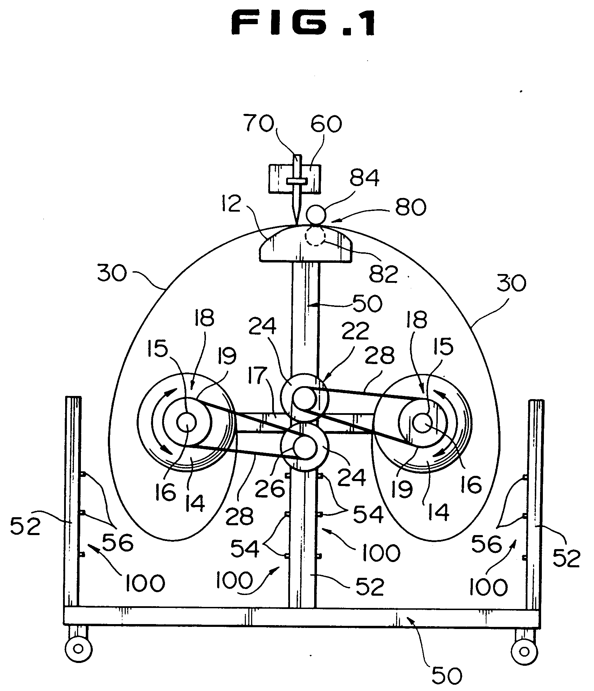

Fig. 1 shows a preferred embodiment of the first supporting device of this invention, or in particular a schematical structural drawing of the same. Description is now given on the embodiment in this figure.

The plotter shown in the figure is a so-called vertical type cutting plotter, comprising a recording plane 12 with semi-circular cross-section, on which the sheet 30 is placed, the feeding means including driving roller 82 and pich roller 84 for moving the sheet 30 in front-back direction over said recording plane, and a pen carriage 60 moving to left or right over the recording plane 12, i.e. pen carriage 60 provided with a cutter 70.

Now, detailed description is given on the first supporting device of this invention to be furnished on this plotter.

The reference number 18 refers the supporting means for rotatably supporting the roll paper 14 in front and rear of the recording plane 12 in normal and reverse direction. This supporting means 18 comprises a support bar 16, closely passable through the hole 15 at the center of roll paper 14, and a support arm 17, supporting said support bar rotatably on plotter main body 50.

22 is a driving means for coiling or uncoiling the sheet 30 on or from roll paper 14 by rotating the roll paper 14 supported on the above supporting means 18 in normal and reverse directions. In the figure, this driving means 22 comprises a pulley 19 engaged with the end of the support bar 16 of said supporting means, a motor 24 such as AC motor installed on the plotter main body 50, and a timing belt 28 connecting between the pulley 26 engaged with output shaft of said motor and the pulley 19 on the end of the above support bar 16.

100 is an adjusting means for adjusting the length of the sheet 30 uncoiled from roll paper by rotating the roll paper 14, supported on said supporting means 18, by the above driving means 22 in normal and reverse directions so that the slackening of the sheet 30 extending in front and rear of the recording plane 12, uncoiled from the roll paper 14 supported on said supporting means 18, is within the range of the predetermined length. In the figure, this adjusting means 100 comprises a light emitter 54 and a photodetector 56 of the photosensors, furnished in 3 steps vertically, each of which being provided the pole 52 extending from the plotter main body 50 installed in front and rear of the roll paper 14 supported on the supporting means 18, and a control means (not shown) for rotating the motor 24 of the driving means according to the height of the lower end of the slackening of the sheet 30, which said photosensor detects.

The first supporting device of Fig. 1 has the above arrangement. When it is used, long sheet 30 is coiled on two rolls continuously, and the support bar 16 of the supporting means in front and rear of the recording plane 12 is closely passed through the hole 15 at the center of the roll paper 14, and the above two rolls of roll paper are rotatably supported around the support bar 16. By rotating the above support bar 16 in normal and reverse directions, the sheet 30 can be coiled or uncoiled on or from roll paper 14 or sheet 30 can be uncoiled from roll paper 14. At the same time, the sheet 30 connecting the roll paper 14 coiled on two rolls is passed over the recording plane 12 forward and backward. Then, the sheet extending in front and rear of the recording plane 12, i.e. the sheet 30 positioned between the recording plane 12 and the roll paper 14, is slackened downward in nearly U-shape.

Then, the sheet 30 is moved over the recording plane 12 forward and backward. When the slackening of the sheet 30 extending in front and rear of the recording plane becomes too long or too short during the cutting of the sheet 30 by the cutter 70 mounted on pen carriage 60, the degree of slackening is detected by the photosensors 54 and 56 of the adjusting means, and the motor 24 of the driving means is rotated in normal or reverse directions. By rotating the support bar 16 of the supporting means, connected with the output shaft through pulley 26, timing belt 28 and pulley 19, the sheet 30 is coiled on roll paper 14 or the sheet 30 is uncoiled from roll paper to adjust the slackening of the sheet 30 extending in front and rear of the recording plane 12. More concretely, when the sheet 30 extending in front and rear of the recording plane 12 is slackened too long and the lower end of the slackening of the sheet enters the area between the light emitter 54 and photodetector 56 of the photosensors on the lower step of the pole 52, the control means is operated by the photosensors 54 and 56 and the motor 24 of the driving means is rotated in the desired direction. As the result, the support bar 16 of the supporting means is rotated in the desired direction together with the roll paper 14, and the long slackened sheet 30 is coiled on roll paper 14. When the lower end of the slackening of the above sheet 30 is lifted higher than the area between light emitter 54 and photodetector 56 of the photosensors in the middle step on the pole 52, the control means is operated by the photosensors 54 and 56, and the rotation of the motor of the driving means is stopped. On the contrary, when the slackening of the sheet 30 extending in front and rear of the recording plane 12 becomes too short and the lower end of the slackening of the sheet 30 is lifted above the area between light emitter 54 and photodetector 56 of the photosensors of the upper step on the pole 52, the control means is operated by the photosensors 54 and 56, and the motor 24 of the driving means is rotated in the desired direction. By rotating the support bar 16 of the supporting means in the desired direction, the sheet 30 is uncoiled from the roll paper 14. When the lower end of the slackening of the sheet 30 enters the area between light emitter 54 and photodetector 56 of the photosensor of the middle step on the pole 52, the control means is operated by the photosensors 54 and 56, and the rotation of the motor 24 of the driving means is stopped. Then, the lower end of the slackening of the sheet 30 is brought to the area between the photosensors 54 and 56 of upper step and lower step on the pole 52. Thus, the slackening of the sheet 30 uncoiled from roll paper 14 extending in front and rear of the recording plane 12 is adjusted to come within the range of the predetermined length.

As the result, it is possible to coil the sheet on roll paper 14 supported on the supporting means 18 in front of the recording plane 12 while proper tension is applied on the sheet, uncoiled from roll paper 14 supported on the supporting means 18 in rear of the recording plane 12 and moving accurately in front and rear of the recording sheet 12, without applying the tension deviated either to left or right and deflecting the sheet over the recording plane 12 or without causing slipping the sheet over the recording plane 14 by applying the tension deviated either forward or backward.

The first supporting device as described above can coil the sheet 30 already cut on the roll paper 14 in front of the recording plane 12, and it is conveniently used for the cutting plotter, which is used to cut signboard characters, marking characters, etc. on the surface of the sheet such as polyvinyl chloride of 2-layer structure having paper mount on rear side.

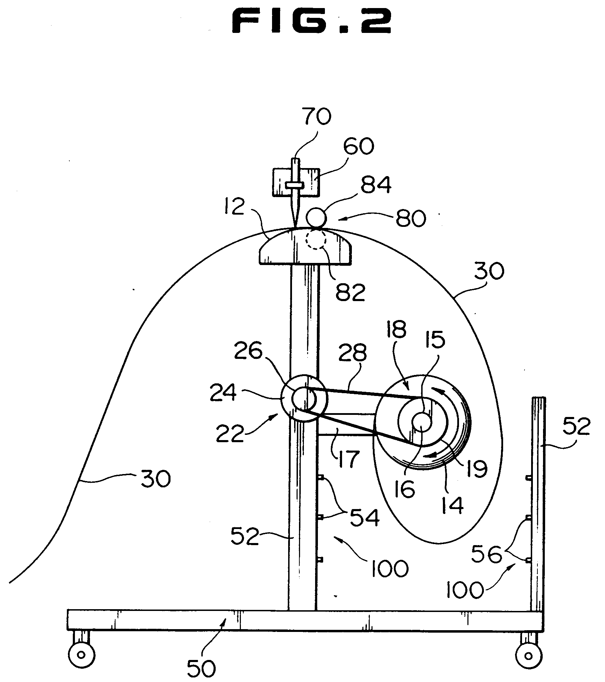

Fig. 2 shows a preferred embodiment of the second supporting device of this invention, and in particular a schematical structural drawing. Description is now given on the embodiment in this figure.

The plotter in this figure is a so-called vertical type cutting plotter, which has the structure similar to that of the plotter provided with the first supporting device as described above.

Now, detailed description is given on the embodiment provided with the second supporting device of this invention.

The plotter in this figure comprises a support bar 16, which is similar to that of the first supporting device and rotatably supports the roll paper 14 in normal and reverse direction, only in rear of the recording plane 12, and further a supporting means 18 having a support arm 17 and the like for rotatably supporting said bar on the plotter main body 50.

It has the same arrangement as the first supporting device already described. When it is used, a support bar 16 is passed closely through the hole 15 at the center of the roll paper 14 where the long sheet 30 is coiled on one roll, and the support bar 16 is rotatably supported on the support arm 17 installed on the plotter main body 50. By passing the sheet 30 uncoiled from roll paper 14 is passed over the recording plane 12 in forward and backward directions, and the sheet 30 extending in rear of the recording plane 12 is slackened downward in U-shape.

When the sheet 30 is moved over the recording plane 12 forward and backward and the slackening of the sheet 30 extending in rear of the recording plane 12 is too long or too short during the cutting of the sheet 30 by the cutter 70 mounted on pen carriage 60, the motor 24 of the driving means is rotated by the adjusting means 100 and the support bar 16 connected with the output shaft through pulley 26, timing belt 28 and pulley 19 is rotated in normal and reverse directions. Thus, the roll paper 14 around the support bar 16 is rotated in normal and reverse directions. Then, by uncoiling the sheet 30 from roll paper 14 by the desired length or by coiling it, the slackening of the sheet 30 extending in rear of the recording plane 12 is adjusted to come within the range of the predetermined length.

Then, as in the case of the first supporting device described above, it is possible to feed the sheet, i.e. the sheet 30 uncoiled from roll paper 14 supported on the supporting means 18 in rear of the recording plane 12, ahead of the recording plane 12 by moving it accurately forward and backward over the recording plane 12 with proper tension applied on it without diviating the sheet over the recording plane 12 by applying the tension deviated to either left or right or without causing the slipping of the sheet over the recording plane 12 by applying the tension deviated either forward or backward.

Because the second supporting device is of such structure that the sheet 30 already cut is sent out to floor surface or the like in front of the recording plane 12, it is conveniently used for the cutting plotter to cut the sheet 30 of monolayer structure to prepare pattern paper for dressmaking.

As described above, it is possible according to the first and the second supporting devices of this invention to coil the sheet, uncoiled from roll paper supported on the supporting means in rear of the recording plane, on the roll paper supported on the supporting means in front of the recording plane or to send it ahead of the recording plane without deflecting the sheet over the recording plane by applying tension deviated to either left or right or without causing the slipping of the sheet over the recording plane by applying tension deviated either forward or backward.

By the cutter mounted on pen carriage, the surface of the sheet, passed over the recording plane can be accurately and beautifully cut in the desired shape without any distortion.

Because proper and mild tension is applied on the sheet passing over the recording plane utilizing its own weight, extended and slackened in front and rear of the recording plane, the sheet uncoiled from roll paper can be cut in the desired shape without stretching and distorting a part of the sheet such as polyvinyl chloride by applying excessive tension.

## Claims

1. A roll paper supporting device of cutting plotter, used for a cutting plotter to cut the surface of the sheet in the desired shape by moving pen caririage toward left and right over the recording plane when the sheet uncoiled from roll paper is moved in front and rear of the recording plane with the cutter on pen carriage pressed on the surface of said sheet, characterized in that there are provided supporting means for rotatably supporting said roll paper in normal and reverse directions in front and rear of said recording plane, driving means for rotating roll paper supported by the supporting means in normal and reverse directions, and adjusting means for adjusting the length of the sheet uncoiled from roll paper by rotating roll paper supported by said supporting means in normal and reverse directions by said driving means so that the slackening of the sheet extending in front and rear of said recording plane, uncoiled from roll paper supported by said supporting means, is within the range of the predetermined length.

2. A roll paper supporting device of cutting plotter, used for a cutting plotter to cut the surface of the sheet in the desired shape by moving pen carriage toward left and right over the recording plane when the sheet uncoiled from roll paper is moved in front and rear of the recording plane with the cutter on pen carriage pressed on the surface of said sheet, characterized in that there are provided supporting means for rotatably supporting said roll paper in normal and reverse directions in rear of said recording plane, driving means for rotating roll paper supported on the supporting means in normal and reverse directions, and adjusting means for adjusting the length of the sheet, uncoiled from roll paper by rotating the roll paper supported by said supporting means and by rotating by said driving means in normal and reverse directions so that the slackening of the sheet, uncoiled from roll paper supported by said supporting means and extending in rear of said recording plane, is within the range of the predetermined length.

3. A device for supporting a roll (14) of a sheet material, and for supplying the sheet material (30) to an operating plane, wherein the device includes supporting means (18) for rotatably supporting said sheet material such that it can be rotated in forward and reverse directions, driving means (24,26,28) for rotating the sheet material supported by the supporting means in forward and reverse directions, such that the sheet material becomes slack between the roll and the operating plane, the driving means being controlled such that the length of the sheet, uncoiled from the roll of sheet material and between the roll and the operating plane, is maintained within a predetermined range.

4. A device as claimed in claim 3, comprising means for detecting the length of the sheet between the roll and the operating plane.

5. A device for supporting sheet material, comprising a pair of devices each as claimed in claim 3 or 4, located on opposite sides of the operating plane for supporting respective ends of a length of sheet material wound on respective rolls.

# FIG.1

# FIG.2

# FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-8 910 888 (SIGNTRONIC A/S)<br>* page 3, line 20 - page 3, line 34; figure 1 *<br>--- | 1-5 | G01D15/24<br>B65H23/04 |
| Y | US-E-30 422 (JEAN MOURIER)<br>* column 2, line 1 - column 3, line 50; figure 6 *<br>*<br>----- | 1-5 | |

TECHNICAL FIELDS
SEARCHED (Int. Cl.5 )

G01D
B65H

The present search report has been drawn up for all claims

| Place of search | Date of completion of the search | Examiner |
|---|---|---|
| THE HAGUE | 05 SEPTEMBER 1991 | LUT K. |

EPO FORM 1503 03.82 (P0401)